# FASCICULE DE BREVET EUROPEEN

(11) **EP 3 003 705 B1**
(45) Date de publication et mention de la délivrance du brevet: **23.08.2017**
(21) Numéro de dépôt: 14731817.4
(22) Date de dépôt: 04.06.2014
(51) Int. Cl.: B32B 5/02, B32B 5/12, B32B 5/26, B32B 3/12, B32B 3/06

(54) **PANNEAU COMPOSITE POUR PLANCHERS OU ÉLÉMENTS D'HABILLAGE DE PAROI, ET PROCÉDÉ DE FABRICATION D'UN TEL PANNEAU**
VERBUNDPLATTE FÜR FUSSBODEN ODER WANDELEMENTE UND VERFAHREN ZU DEREN HERSTELLUNG
COMPOSITE PANEL FOR FLOOR COVERINGS OR WALL ELEMENTS AND FABRICATION METHOD THEREOF

(30) Priorité: 06.06.2013 FR 1355243
(43) Date de publication de la demande: 13.04.2016
(73) Titulaire: Les Stratifies, 75008 Paris (FR)
(72) Inventeur: LE LAY, Loïc, F-62144 Acq (FR); BACLET, Laurent, F-02200 Belleu (FR); SCAGNETTI, Julien, F-60420 Maignelay Montigny (FR)
(74) Mandataire: Gevers & Orès
(86) Numéro de dépôt international: PCT/IB2014/061948
(87) Numéro de publication internationale: WO 2014/195884

(56) Documents cités:
- WO-A1-92/17331
- GB-A- 2 477 091
- US-A1- 2006 204 714
- US-A1- 2009 072 086
- US-A1- 2010 055 384
- "Tedtex composite fabrics", Zedtex Australia , 8 février 2013 (2013-02-08), XP002719798, Extrait de l'Internet: URL:http://smithuren.com/wp-content/pdfs/Z edtex_Composite_Fabrics_Brochure_A4.pdf [extrait le 2014-02-05]
- "Technical fabrics handbook. HexForce®Reinforcements", Hexcel , 21 décembre 2010 (2010-12-21), XP002719799, Extrait de l'Internet: URL:http://www.hexcel.com/Resources/DataSh eets/Brochure-Data-Sheets/HexForce_Technic al_Fabrics_Handbook.pdf [extrait le 2014-02-01]
- Álvaro Jiménez Mancha: "OPTIMIZATION OF LIGHTWEIGHTSANDWICH STRUCTURES OFCOMMERCIAL AIRCRAFT INTERIOR PARTSSUBJECTED TO LOW-VELOCITY IMPACT", Universidad Pontificia Comillas. Escuela técnica superior de ingeniería (ICAI) , 30 juin 2012 (2012-06-30), page 86, XP002719839, Madrid Extrait de l'Internet: URL:http://www.iit.upcomillas.es/pfc/resum enes/4fd71dd20c849.pdf [extrait le 2014-02-05]

## Description

L'invention concerne un panneau composite pour planchers ou éléments d'habillage de paroi type cloison, panneau latéral ou meuble, ainsi qu'un procédé de fabrication d'un tel panneau.

Dans de nombreux secteurs et, notamment, l'aéronautique, le gain de poids est une préoccupation majeure pour améliorer l'efficacité énergétique des appareils.

Le gain de poids est généralement en contradiction avec l'autre préoccupation majeure des ces secteurs : la résistance mécanique.

Dans l'exemple d'un aéronef, de nombreux élément sont constitué de matériaux composites alliant un poids faible et une résistance mécanique accrue.

Actuellement, les planchers ou les éléments d'habillage de parois sont majoritairement composés de panneaux composites comprenant une âme centrale en nid d'abeille (ou « nida »), est deux « peaux » fixées de part et d'autre du nida. Ces peaux comprennent une ou plusieurs couches de matériaux identiques ou différents.

En particulier, les panneaux composites utilisés actuellement sont constitués par un empilement de couches constituées d'un matériau d'âme en Nida aluminium 1/8 (maille de 3,2mm) de densité 98 kg/m³ de chez Hexcel© ou de chez Alcore Brigantine© et d'une peau externe type poly(p-phénylènetéréphtalamide) 20914 (plus connu sous son nom commercial de Kevlar®), tissé selon une armure type 4H satin, et pré imprégné avec une résine époxy 1454 de chez Hexcel©.

Le drapage se fait manuellement avec la possibilité de recouvrir l'ensemble de plis de tissu décoratifs, sans impact sur la tenue mécanique des panneaux.

Des inserts de fixation sont prévus pour fixer ces panneaux sur des supports en position d'utilisation. Les inserts actuellement utilisés sont en Inox collés à l'aide d'une colle structurale ou de type résine de densification de 30mm de diamètre.

Les bords de chaque panneau sont recouverts d'une résine de bordurage spécifique de densité 0,68.

Les panneaux actuels présentent l'avantage d'être très résistants au pelage, c'est-à-dire à la séparation des différentes couches. Ils constituent donc des planchers résistants à l'usure et à la friction engendrées par le passage des usagers.

Néanmoins, les panneaux actuels présentent de nombreux inconvénients. Leur masse reste toujours trop élevée par rapport aux exigences de construction de plus en plus contraignantes concernant les aéronefs.

En outre, ils présentent une déflexion plus importante sous une charge locale qu'un panneau selon l'invention comprenant des peaux en carbone. Ce phénomène vient du fait que la fibre de Kevlar® utilisée pour les peaux est une fibre plus élastique que la fibre de carbone.

Enfin, ils ont une faible résistance à l'impact et nécessitent d'être recouverts d'une couche protectrice, par exemple en moquette.

US2010055384 divulgue un panneau qui comprend: une âme en meta-aramide fibre en nid d'abeille, de part et d'autre de laquelle sont disposés deux peaux comprenant chacune: un pli interne en contact avec l'âme en nid d'abeille et comprenant une nappe de fibres de carbone unidirectionnelles orientées, de module d'élasticité intermédiaire, et de masse 125 g/m2; un pli externe, en contact avec le pli interne, comprenant: une deuxième nappe de fibres de carbone unidirectionnelles orientées selon un angle de 45°, de module d'élasticité intermédiaire, de masse 123 g/m2, et une couche de fibre de verre à l'extérieur.

La présente invention vise donc à permettre la réalisation d'un plancher ou d'éléments d'habillage de paroi légers, rigides sous une charge locale, et résistants aux impacts et au pelage.

L'invention propose de remplacer l'âme nid d'abeille en aluminium par une âme nid d'abeille en Kevlar®.

Ce matériau est connu pour sa grande sensibilité au pelage et n'est, en pratique, pas utilisé pour réaliser des âmes en nid d'abeille pour ce type de panneaux.

La présente invention permet, notamment, l'utilisation d'un tel matériau pour l'âme en nid d'abeille tout en conservant d'excellentes propriétés contre le pelage mais aussi mécaniques.

A cette fin, l'invention a pour objet un panneau composite caractérisé en ce qu'il comprend :
- une âme en nid d'abeille en poly(p-phénylènetéréphtalamide), de part et d'autre de laquelle sont disposés :
- un pli interne en contact avec l'âme en nid d'abeille, et comprenant :
   - un tissu de fibre de verre E imprégné d'au moins 70% en poids de résine époxy, et de masse inférieure ou égale à 30 g/m², le tissu étant en contact avec l'âme en nid d'abeille ; et
   - une nappe de fibres de carbone unidirectionnelles orientées selon une première direction, de module d'élasticité compris entre 275 et 300 GPa, de masse inférieure ou égale à 100 g/m² , et pré imprégnée entre 30% et 40 % en poids d'une résine époxy;
- un pli externe, en contact avec le pli interne correspondant, comprenant :
   - une nappe de fibres de carbone unidirectionnelles orientées selon une deuxième direction différente de la première direction de la nappe de fibres de carbone du pli interne, de module d'élasticité compris entre 275 et 300 GPa, de masse inférieure ou égale à 100 g/m², et pré imprégnée entre 30% et 40 % en poids d'une résine époxy. La nappe de fibres de carbone unidirectionnelles de chaque pli externe étant en regard de la nappe de fibres de carbone unidirectionnelles du pli interne correspondant ; et
   - un tissu de fibre de verre E de masse inférieure ou égale à 30 g/m², et pré imprégné d'au moins 70% en poids de résine époxy.

C'est notamment la présence d'un voile de tissu de fibres de verre de type E sur-imprégné de résine époxy (au moins 70% d'imprégnation) se trouvant au contact du nid d'abeille en Kevlar® qui permet d'obtenir une résistance au pelage aussi importante que celle des panneaux de l'état de la technique. Ce voile de verre se trouve également sur la face extérieure de la peau afin d'apporter une protection à la corrosion induite par le carbone (par exemple corrosion de la sous-structure en aluminium des avions) et aux impacts locaux.

Selon d'autres modes de réalisation :
- la résine époxy peut être auto extinguible ;
- l'âme en nid d'abeille peut présenter une direction L dite de « sens ruban » et une direction W dite de « sens expansion », perpendiculaire à la direction L, et dans lequel la première direction de la nappe de fibres de carbone unidirectionnelles est perpendiculaire à la direction L de sens ruban ;
- la deuxième direction de la nappe de fibres de carbone du pli externe peut former un angle avec la première direction de la nappe de fibres de carbone du pli interne, compris entre 45° et 135°, de préférence entre 60° et 120°, avantageusement de 90° ;
- le panneau peut comprendre, en outre, entre un pli interne et un pli externe, au moins une, de préférence entre une et quatre nappe(s) de fibres de carbone unidirectionnelles de masse inférieure ou égale à 100 g/m², pré imprégnée(s) entre 30% et 45 % en poids d'une résine époxy, et orientée(s) selon la même deuxième direction que celle de fibres de carbone unidirectionnelles de la nappe de fibres de carbone unidirectionnelles des plis externes ;
- les fibres de verre E peuvent présenter :
   - une résistance à la traction maximale égale à 3400 MPa,
   - un module d'élasticité de 70 000 MPa environ et
   - une densité relative égale à 2,5 g/cm³ ;
- les fibres de carbone peuvent présenter :
   - une résistance à la traction maximale comprise entre 4000 et 7000 MPa,
   - un module d'élasticité compris entre 275 000 et 300 000 MPa et
   - une densité relative égale à 1,8 g/cm³ ;
- le panneau peut comprendre, en outre, un tissu de fibres de pararamide associé à une résine de Polyétherimide (PEI) ; et/ou
- le panneau peut comprendre, en outre, des inserts de fixation en polyamide-imide (Torlon®).

L'invention a également pour objet un procédé de fabrication d'un panneau composite précédent, caractérisé en ce qu'il comprend les étapes suivantes :
(a) déposer de part et d'autre d'une âme en nid d'abeille en poly(p-phénylènetéréphtalamide), un pli interne, comprenant :
   - en contact avec l'âme en nid d'abeille, un tissu de fibre de verre E de masse inférieure ou égale à 30 g/m², et pré imprégné d'au moins 70% en poids de résine époxy ; et
   - en contact avec le tissu de fibres de verre E, une nappe de fibres de carbone unidirectionnelles de module d'élasticité compris entre 275 et 300 GPa de masse inférieure ou égale à 100 g/m², et pré imprégnée entre 30% et 40 % en poids d'une résine époxy, disposées de sorte que les fibres de carbone soient orientées selon une première direction ;
(c) déposer sur la nappe de fibres de carbone unidirectionnelles de chaque pli interne, un pli externe comprenant :
   - en regard de la nappe de fibres de carbone unidirectionnelles du pli interne correspondant, une nappe de fibres de carbone unidirectionnelles disposées de telle sorte que les fibres soient orientées selon une deuxième direction, différente de la première direction de la nappe de fibres de carbone du pli interne, de module d'élasticité compris entre 275 et 300 GPa de masse inférieure ou égale à 100 g/m², et pré imprégnée entre 30% et 40 % en poids d'une résine époxy ; et
   - en contact avec la nappe de fibres de carbone unidirectionnelles orientées selon la deuxième direction, un tissu de fibre de verre E de masse inférieure ou égale à 30 g/m², et pré imprégné d'au moins 70% en poids de résine époxy,
afin d'obtenir un empilement de couche composite.

Selon d'autres modes de réalisation :
- le procédé peut comprendre, en outre, une étape (b), entre l'étape (a) et l'étape (c), de dépôt d'au moins une nappe de fibres de carbone unidirectionnelles de masse inférieure ou égale à 100 g/m², et pré imprégnée entre 30% et 40 % en poids d'une résine époxy, orientée(s) selon la même deuxième direction que celle de fibres de carbone unidirectionnelles de la nappe de fibres de carbone unidirectionnelles des plis externes déposée à l'étape (c) ;
- préalablement à l'étape (a), chaque face de l'âme en nid d'abeille peut être usinée avec une fraise comportant une scie en extrémité de fraise ; et/ou
- le panneau peut être usiné localement sur au moins une partie de son épaisseur, pour créer des puits dans lesquels sont disposés des inserts de fixation en polyamide-imide maintenus en position par une colle.

D'autres caractéristiques de l'invention ressortiront de la description détaillée ci-après faite en référence aux dessins annexés qui représentent, respectivement :
- la figure 1, une vue schématique en perspective d'une couche en nid d'abeille utilisée dans un panneau selon l'invention ;
- la figure 2, une vue schématique en coupe d'un premier mode de réalisation d'un panneau selon l'invention ;
- les figures 3 à 7, des vue schématique en coupe de cinq modes de réalisation d'un panneau selon l'invention comprenant des couches de renfort supplémentaires ;
- la figure 8, une vue schématique en coupe de l'usinage d'une âme en nid d'abeille Kevlar® utilisée dans un panneau selon l'invention ; et
- la figure 9, une vue schématique en coupe d'un insert dans un panneau selon l'invention.

Dans la présente description, les mots et expressions ci-après ont les définitions suivantes :
- nappe : une nappe est un assemblage unidirectionnel de fibres non tissées et maintenues ensemble par tout moyen, tel qu'une colle, une résine, un adhésif. Par opposition, un tissu est un entrelacs bidirectionnel (chaine et maille) de fibres entrecroisées selon une ou plusieurs armures (par exemple toile, satin, sergé, ou autres)
- pré imprégné(e) : une nappe ou un tissu pré-imprégné(e) comprend une résine mélangée à la nappe ou au tissu lors de sa fabrication, avant la réalisation du panneau.
- Le pourcentage d'imprégnation ou pourcentage de résine est le rapport entre le poids total de la nappe ou du tissu préimprégné(e), et le poids de résine, le tout multiplié par cent.
- Une fibre de verre de type E présente les caractéristiques chimiques suivantes :

| | **Verre de type E** |
|---|---|
| SiO₂ | 53-55 % |
| Al₂O₃ | 14-15 % |
| CaO | 17-23 % |
| MgO | 1 % |
| Na₂CO₃ | 0,8 % |
| B₂O₃ | 0-8 % |
| Fe₂O₃ | 0,3 % |
| TiO₂ | 0,5 % |
| ZrO₂ | / |

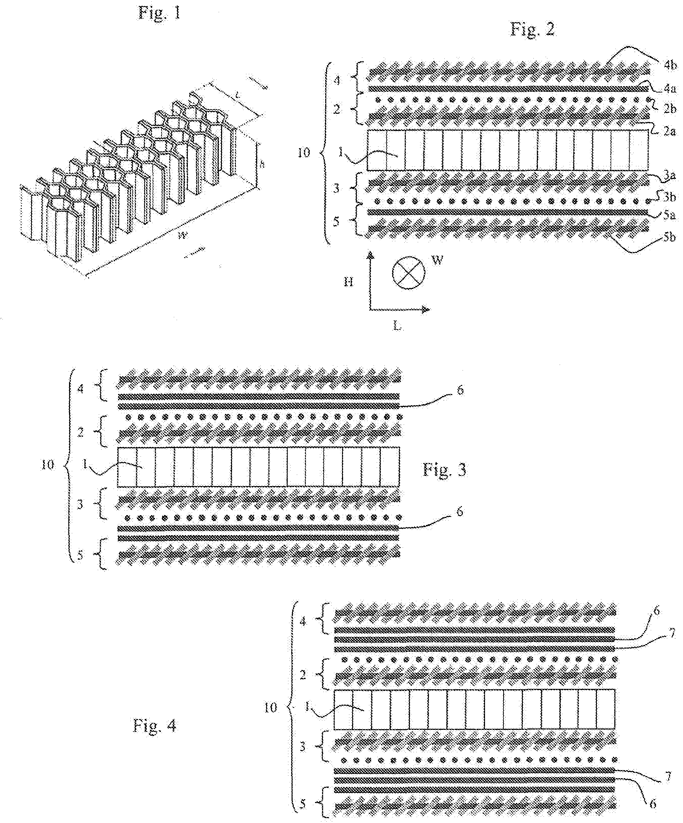

Ses propriétés mécaniques seront ensuite plus ou moins grandes suivant le tissage de cette dernière pour la formation d'un nappe.
- Une couche présentant une structure en nid d'abeille (voir la figure 1) comprend trois directions perpendiculaires entre elles : la direction W dite de « sens expansion » (généralement prise comme référence angulaire : 0°), la direction L dite de « sens ruban », perpendiculaire à la direction W (90° par rapport à la direction W qui est à 0°), et la direction h représentant la hauteur de la couche.
- module intermédiaire : une fibre de carbone est dite « de module intermédiaire » lorsqu'elle présente un module de Young (ou module d'élasticité) compris entre 275 et 300 GPa. Au contraire, une fibre de carbone est dite « à haut module » lorsqu'elle présente un module de Young (ou module d'élasticité) compris entre 350 et 450 GPa, et une fibre de carbone est dite « à basse résistance » ou standard lorsqu'elle présente un module de Young (ou module d'élasticité) inférieur à 240 GPa.
- les fibres de verre peuvent être classées de la manière suivante : les fibres de verre E dites « standard » qui présentent un module de Young (ou module d'élasticité) de 70 GPa, les fibres de verre S et R dite « de haute résistance » et qui présentent un module de Young (ou module d'élasticité) compris entre 85 et 90 GPa, et les fibres de verre D offrant de très bonnes propriétés diélectrique. D'autres fibres de verre existent également pour la résistance en milieu basique (verre AR), en milieu chimique (verre C) et en milieu acide (verre E - CR).

Les figures 2 à 7 représentent des modes de réalisation d'un panneau composite selon l'invention.

Le panneau 10 illustré en figure 2 comprend :
- une âme 1 en nid d'abeille en Kevlar® (poly(p-phénylènetéréphtalamide)), de part et d'autre de laquelle sont disposés :
- un pli interne 2-3 en contact avec l'âme en nid d'abeille 1, et un pli externe 4-5, en contact avec le pli interne correspondant (c'est-à-dire du même côté par rapport à la couche en nid d'abeille 1).

Chaque pli interne 2-3 comprend :
- un tissu de fibre de verre E 2a-3a d'une masse inférieure ou égale à 30 g/m² pré imprégné d'au moins 70% en poids de résine époxy. Le tissu 2a-3a est en contact avec l'âme en nid d'abeille 1 ; et
- une nappe 2b-3b de fibres de carbone unidirectionnelles à module intermédiaire orientées selon une première direction, de module d'élasticité compris entre 275 et 300 GPa, de masse inférieure ou égale à 100 g/m² pré imprégnée entre 30% et 40 % en poids d'une résine époxy.

Le tissu de fibres de verre de type E de faible masse (inférieure ou égale à 30g/m²) surchargé en résine (plus de 70% de résine époxy) au contact de la couche en nid d'abeille 1 permet d'obtenir une excellente tenue au pelage malgré l'utilisation de Kevlar® pour le nid d'abeille. Cette tenue est aussi importante que celle des panneaux de l'état de la technique, voire meilleure. La mesure de résistance au pelage a été effectuée par la méthode de mesure dite « au tambour grimpant », conformément aux prescriptions de la certification aéronautique ASTM D1781.

Le tissu de fibres de verre selon l'invention permet également d'obtenir une excellente protection à la corrosion induite par le carbone (par exemple corrosion de la sous-structure en aluminium des avions) et aux impacts locaux.

La mesure de résistance à la corrosion a été effectuée conformément aux prescriptions de la certification aéronautique ABD0031.

La mesure de résistance aux impacts locaux a été effectuée conformément aux prescriptions de la certification aéronautique ASTM D3029 et des prescriptions aéronautiques Airbus© AITM1.0057.

La nappe 2b-3b de fibres de carbone unidirectionnelles est orientée selon une première direction d'orientation des fibres de carbone. Celle-ci peut être la direction L du sens ruban du nid d'abeille (90°) ou la direction W perpendiculaire à ce sens ruban (0°), c'est-à-dire la direction de sens expansion.

Avantageusement, la première direction d'orientation des fibres de carbone des nappes 2b et 3b est la direction W, perpendiculaire au sens ruban (0°), c'est-à-dire la direction de sens expansion.

Sur la figure 2, cette orientation est schématisée par une ligne de points représentant les fibres en coupe transversale. Bien entendu, cette représentation n'est pas à l'échelle et dans la réalité, les fibres sont beaucoup plus proches les unes des autres.

Cet agencement permet un gain de résistance du panneau à la déformation supérieur d'environ 4% au niveau de la déformée.

Chaque pli externe 4-5 comprend :
- une nappe 4a-5a de fibres de carbone unidirectionnelles à module intermédiaire, de module d'élasticité compris entre 275 et 300 GPa, de masse inférieure ou égale à 100 g/m² pré imprégnée entre 30% et 40 % en poids d'une résine époxy.
- un tissu de fibre de verre E 4b-5b d'une masse inférieure ou égale à 30 g/m² pré imprégné d'au moins 70% en poids de résine époxy. Le tissu 4b-5b est en contact du milieu ambiant.

Les nappes 4a-5a sont disposées en regard des nappes 2b-3b de fibres de carbone unidirectionnelles du pli interne correspondant.

Les fibres de carbone unidirectionnelles des nappes 4a-5a sont orientées selon une deuxième direction, différente de la première direction de la nappe 2b-3b de fibres de carbone du pli interne.

La deuxième direction de la nappe de fibres de carbone du pli externe forme un angle avec la première direction W de la nappe de fibres de carbone du pli interne, compris entre 45° et 135°, de préférence entre 60° et 120.

Avantageusement, l'angle entre la deuxième et la première direction est de 90° (+/- 3°). Autrement dit, les fibres de carbone de la nappe de d'un pli externe sont perpendiculaires aux fibres de carbone de la nappe du pli interne correspondant. Ceci signifie que la deuxième direction d'orientation des fibres de carbone des nappes 2b et 3b est la direction L de sens ruban.

Le respect d'un positionnement perpendiculaire des fibres de carbone du pli externe par rapport aux fibres de carbone du pli interne correspondant permet de garantir une meilleure résistance du pli externe à la déformation mais aussi à l'impact et aux contraintes mécaniques que si l'angle entre les deux nappes est différent de 90° (+/- 3°).

La résine époxy utilisée pour imprégner les nappes 2b-3b-4a-5a de fibres de carbone et les tissus 2a-3a-4b-5b de fibres de verre est une résine époxy évoluée de type EP137 de chez Gurit© qui répond aux exigences de résistance au feu de la norme aéronautique FAR 25.853 mais aussi d'émanation de fumée, de toxicité et de dégagement de chaleur de la certification aéronautique ABD0031.

Les fibres de carbone présentent :
- une résistance à la traction maximale de préférence égale à 5 600 MPa. La résistance à la traction maximale peut être comprise entre 4 000 et 7 000 MPa
- un module d'élasticité de 290 000 MPa. Le module d'élasticité peut être compris entre 275 000 et 300 000 MPa ; et
- une densité relative égale à 1,8 g/cm³.

Le tissu 4b-5b de fibre de verre utilisé dans les plis externe est identique à celui utilisé dans les plis internes.

Les fibres de verre E présentent :
- une résistance à la traction maximale de préférence égale à 3 400 MPa.
- un module d'élasticité de l'ordre de 70 000 MPa.
- une densité relative égale à 2,5 g/cm³.

La résistance à la traction maximale et le module d'élasticité sont mesurées par la méthode ASTM D3379.

La densité relative est mesurée par la méthode ASTM D3800.

L'utilisation, dans les plis internes et externes, de fibres de carbone unidirectionnelles à module d'élasticité intermédiaire permet une meilleure résistance aux efforts par rapport aux fibres de carbone à haute résistance.

Pour fabriquer un panneau composite selon l'invention, on met en oeuvre le procédé suivant :
Dans une étape (a), on dépose de part et d'autre d'une âme en nid d'abeille 1 en poly(p-phénylènetéréphtalamide), un pli interne 2-3, comprenant :
   - en contact avec l'âme 1 en nid d'abeille, un tissu 2a-3a de fibre de verre E de masse inférieure ou égale à 30 g/m² pré imprégné d'au moins 70% en poids de résine époxy ; et
   - en contact avec le tissu 2a-3a de fibres de verre E, une nappe 2b-3b de fibres de carbone unidirectionnelles de module d'élasticité compris entre 275 et 300 GPa de masse inférieure ou égale à 100 g/m² pré imprégnée entre 30% et 40 % en poids d'une résine époxy, et, disposées de sorte que les fibres de carbone soient orientées selon une première direction.
Dans une étape (c), déposer sur la nappe 2b-3b de fibres de carbone unidirectionnelles de chaque pli interne 2-3, un pli externe 4-5 comprenant :
   - en regard de la nappe 2b-3b de fibres de carbone unidirectionnelles du pli interne correspondant, une nappe 4a-5a de fibres de carbone unidirectionnelles disposées de telle sorte que les fibres soient orientées selon une deuxième direction, différente de la première direction de la nappe 2b-3b de fibres de carbone du pli interne, de module d'élasticité compris entre 275 et 300 GPa de masse inférieure ou égale à 100 g/m² pré imprégnée entre 30% et 40 % en poids d'une résine époxy ; et
   - en contact avec la nappe 4a-5a de fibres de carbone unidirectionnelles orientées selon la deuxième direction, un tissu 4b-5b de fibre de verre E de masse inférieure ou égale à 30 g/m² pré imprégné d'au moins 70% en poids de résine époxy,
afin d'obtenir un empilement de couche composite.

Pour certaines applications, le nombre de nappes de fibres de carbone peut être augmenté afin de répondre à des besoins de rigidité supplémentaire. Pour cela, entre l'étape (a) et l'étape (c), des plis intermédiaires, constitués chacun d'une seule nappe de fibres de carbone unidirectionnelles, sont déposés selon la même deuxième direction que celle de fibres de carbone unidirectionnelles de la nappe de fibres de carbone unidirectionnelles des plis externes déposée à l'étape (c).

Après la mise en oeuvre de l'étape (c), ces plis intermédiaires sont intercalés entre les plis internes et les plis externes.

Les nappes de fibres de carbone utilisées dans les plis intermédiaires sont identiques à celles utilisées dans les plis internes et externes.

Ces modes de réalisation sont illustrés aux figures 3 à 6 dans lesquels le panneau comprend, respectivement une (6a), deux (6a-6b), trois (6a-6b-6c), quatre (6a, 6b, 6c, 6d) et cinq (6a, 6b, 6c, 6d, 6e) nappes additionnelles de fibres de carbone de faible masse (inférieure ou égale à 100g/m2), à module d'élasticité intermédiaire et pré imprégnées d'une résine époxy auto-extinguible (de 30% a 40% en poids d'imprégnation).

Selon l'invention, l'orientation des nappes additionnelles de fibres de carbone unidirectionnelles est toujours suivant le sens ruban (90°).

Cet agencement permet d'obtenir un panneau présentant une résistance optimale à la déformation des panneaux par rapport aux poids global du panneau.

L'âme 1 en nid d'abeille en Kevlar® (poly(p-phénylènetéréphtalamide)) présente avantageusement une densité comprise entre 72 kg/m³ et 96 kg/m³.

L'âme 1 en nid d'abeille utilisée présente avantageusement une taille de maille de 0,4 mm et une épaisseur de papier comprise entre 70µm et 72µm. La hauteur h de l'âme 1 se calcule en fonction de l'épaisseur de la peau (constituée par un pli interne, un pli externe et, éventuellement un ou plusieurs plis intermédiaires) et l'épaisseur du panneau composite demandée par les constructeurs aéronautiques afin de satisfaire les prescriptions requises pour le panneau.

Par exemple, une nappe de fibres de carbone unidirectionnelles et son voile de fibres de verre E a une épaisseur de 0,125 mm. Une nappe seule de fibres de carbone unidirectionnelles a une épaisseur de 0,1 mm.

### Par exemple :

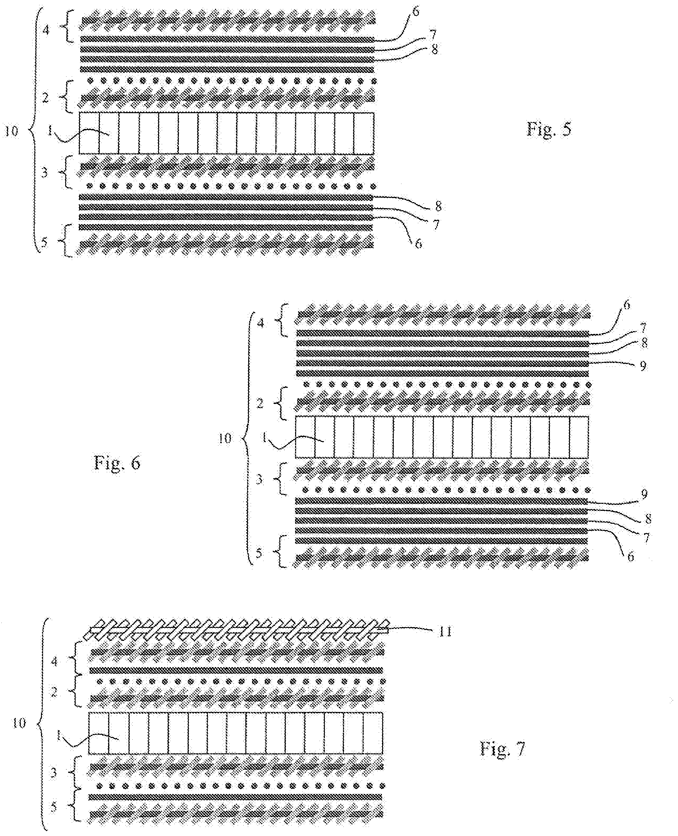

- pour le mode de réalisation de la figure 2, la hauteur h de l'âme 1 est de 9,5 mm afin de répondre au besoin d'un panneau de 10 mm d'épaisseur (âme et peaux associées) ;
- pour le mode de réalisation de la figure 3, la hauteur h de l'âme 1 est de 9,3 mm;
- pour le mode de réalisation de la figure 4, la hauteur h de l'âme 1 est de 15,1 mm afin de répondre au besoin d'un panneau de 16 mm d'épaisseur (âme et peaux associées) ;
- pour le mode de réalisation de la figure 5, la hauteur h de l'âme 1 est de 14,9 mm ;
- pour le mode de réalisation de la figure 6, la hauteur h de l'âme 1 est de 14,7 mm ;
- pour le mode de réalisation de la figure 7, la hauteur h de l'âme 1 est de 9,5 mm;

L'utilisation d'une âme 1 de densité 96 kg/m³ est recommandée pour pouvoir respecter des contraintes de poinçonnement de l'ordre de 150 daN (par exemple par un talon aiguille) mais aussi de résistance à la compression et au cisaillement.

Grâce à l'empilement selon l'invention, on obtient un panneau composite possédant un très bon comportement à l'impact (résistance jusqu'à 12J) à comparer aux 7,2J obtenus par les panneaux antérieurs constitués d'un tissu Kevlar recouvrant une âme en nid d'abeille aluminium.

La résistance des panneaux à l'impact est mesurée à l'aide d'une tour de chute suivant l'AITM 1.0057 d'Airbus®.

Pour certaines applications, la densité de l'âme 1 peut être de 72 kg/m³ pour une épaisseur de papier comprise en 45µm et 47µm. L'utilisation de ce Nida se fera lorsque le besoin de poinçonnement peut être levé ou si l'épaisseur de peau (présence d'un ou plusieurs plis intermédiaires) est suffisante pour respecter la contrainte de poinçonnement de 150 daN.

Si l'augmentation de robustesse de l'ensemble est nécessaire, une couche externe 11 (voir figure 7) de type pararamide/Polyétherimide (PEI) pouvant faire jusqu'a 350 g/m² peut être appliquée sur la face externe (couche 4b en tissus de fibres de verre E) d'au moins un des plis externe du panneau composite. Cette couche externe, d'une épaisseur de 0,250 mm, garantit la protection à l'impact de l'ensemble du panneau composite jusqu'à 16J tout en optimisant la prise de masse et en la diminuant au maximum.

La résistance des panneaux à l'impact est mesurée à l'aide d'une tour de chute suivant l'AITM 1.0057 d'Airbus®.

Le panneau composite selon l'invention permet d'appliquer cette couche à froid en utilisant une colle de type Montaprene 2796© qui augmente la résistance et l'amortissement à l'impact grâce à sa souplesse.

Le collage à froid permet d'associer ces matériaux alors même qu'ils ont des coefficients de dilatation très différents.

Avec des panneaux de l'art antérieur, le collage aurait dû se faire à chaud, ce qui oblige à équilibrer le panneau et donc, à recouvrir les deux plis externe de cette couche pararamide/PEI.

Les caractéristiques du panneau selon l'invention, en particulier la présence vers l'extérieur, d'un tissus de fibre de verre E et, à l'intérieur de nappes de fibres de carbone présentant des orientations différentes, permet d'éviter d'équilibrer les panneaux (collage d'une couche pararamide/PEI sur une seule face), et donc de limiter le poids général du panneau.

L'état de surface de l'âme 1 en Kevlar® est une donnée importante pour le respect des conditions de pelage. Ce pelage doit être proche de celui obtenu avec un nid d'abeille de l'art antérieur (aluminium) afin de conserver un pelage supérieur à 15 daN.

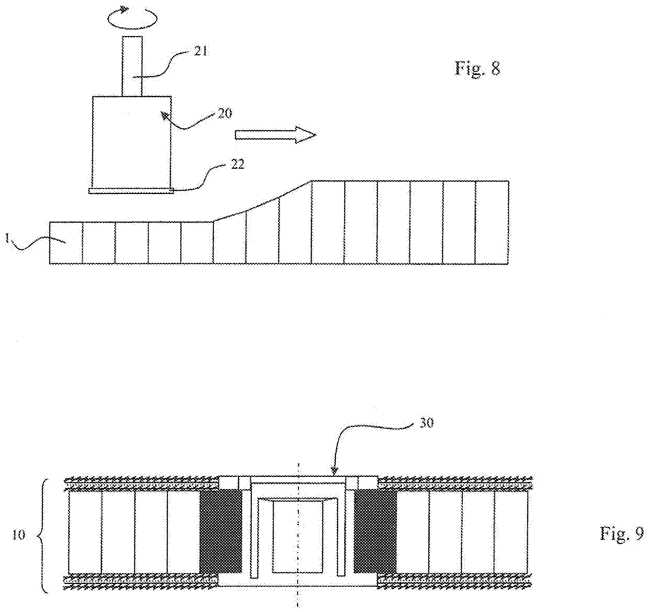

A cette fin, comme illustré en figure 8, préalablement à l'étape (a), l'invention propose d'usiner chaque face de l'âme 1 en Kevlar® à l'aide d'une fraise 20 comportant une extrémité en prise avec un arbre de rotation 21 et une extrémité libre comportant une scie 22. Ce type de fraise est fabriqué notamment par Neuhauser-Controx GmbH (par exemple une fraise multi dents à revêtement diamant et plaque de découpe PVD référence 7300-017-050-23-10).

L'utilisation de ce type de fraise permet de supprimer toute barbe de fabrication et d'obtenir un état de surface tel que lorsque le pli interne est collé sur l'âme, le pelage est supérieur à 15 daN, ce qui n'avait jamais été obtenu avec un nid d'abeille en Kevlar.

L'orientation des nappes ayant été spécifiée ci-dessus, le drapage (procédé de pose des couches) doit respecter des contraintes suivantes :
- il est essentiel que toutes les peluches ou barbes en surface de l'âme 1 soient ou aient été éliminées sous peine d'effondrer la tenue au pelage des plis mais aussi d'effondrer la résistance mécanique du panneau. Il est donc nécessaire d'utiliser une âme en nid d'abeille Kevlar® dépourvue de barbes.
- les lés de nappes de fibres de carbone unidirectionnelles ne doivent pas se recouvrir lors de la pose l'un à côté de l'autre de ces derniers, sous peine d'effondrement de la tenue au pelage et de la tenue mécanique (flexion) du panneau. L'intervalle de tolérance de pose entre deux lés : 0 à 2 mm.

Le panneau composite selon l'invention permet l'utilisation de composants entrant directement dans la diminution de la masse de l'ensemble.

Il est ainsi possible d'utiliser des inserts de fixation 30 (voir figure 9) en matériaux légers non métalliques, tel que le polyamide-imide commercialisé sous la marque Torlon®, à la place des inserts en inox utilisés dans les panneaux de l'état de la technique.

Les inserts suivants peuvent être utilisés :
- insert flottant type AEP1035-3S375 ou
- insert fixe type AEP1036-3-12,
de la société ADVANCED ENGINEERED PRODUCTS, INC

Ce type d'insert en Torlon® permet un gain de 50% de masse sur chaque fixation nécessaire à la complétion. L'utilisation de ce type d'inserts est rendue possible grâce à la présence du tissu 2a-3a sous la nappe 2b-3b de fibres de carbone unidirectionnelles qui augmente considérablement la tenue de la peau sur l'âme 1 en nid d'abeille Kevlar®. Cette tenue supérieure au pelage de la peau permet ainsi grâce au trépanage du nida de mieux diffuser les efforts inscrit dans l'insert et donc de faire travailler l'ensemble du complexe (nida + peau + insert + colle de l'insert) et non seulement l'insert et sa colle.

Pour fixer ces inserts 30 dans le panneau, le panneau est usiné localement sur au moins une partie de son épaisseur, pour créer des puits dans lesquels sont disposés des inserts de fixation en polyamide-imide. L'usinage est par exemple un trépanage d'un diamètre supérieur de 3mm à celui de l'insert. Puis l'insert est positionné et le vide entre l'insert et le panneau est comblé avec une colle structurale de type ADEKIT® A171/H9971 de chez AXSON®. Cette colle assure la tenue de l'insert et garantit sa résistance aux efforts de traction et de cisaillement requis par les constructeurs aéronautiques dans leurs spécifications techniques.

L'invention permet donc d'obtenir un panneau composite léger et aussi performant, voire plus performant que les panneaux de l'état de la technique.

Les panneaux selon l'invention peuvent être utilisés comme planchers composites, cloisons composites, panneaux d'habillage composites, meubles ou structures composites.

## Revendications

1. Panneau composite (10) **caractérisé en ce qu'**il comprend :
• une âme (1) en nid d'abeille en poly(p-phénylènetéréphtalamide), de part et d'autre de laquelle sont disposés deux peaux comprenant chacune :
• un pli interne (2, 3) en contact avec l'âme (1) en nid d'abeille, et comprenant :
- un tissu (2a, 3a) de fibre de verre E imprégné d'au moins 70% en poids de résine époxy, et de masse inférieure ou égale à 30 g/m², le tissu (2a, 3a) étant en contact avec l'âme (1) en nid d'abeille ; et
- une nappe (2b, 3b) de fibres de carbone unidirectionnelles orientées selon une première direction, de module d'élasticité compris entre 275 et 300 GPa, de masse inférieure ou égale à 100 g/m² , et pré imprégnée entre 30% et 40 % en poids d'une résine époxy;
• un pli externe (4, 5), en contact avec le pli interne (2, 3) correspondant, comprenant :
- une nappe (4a, 5a) de fibres de carbone unidirectionnelles orientées selon une deuxième direction différente de la première direction de la nappe (2b, 3b) de fibres de carbone du pli interne (2, 3), de module d'élasticité compris entre 275 et 300 GPa, de masse inférieure ou égale à 100 g/m², et pré imprégnée entre 30% et 40 % en poids d'une résine époxy, la nappe (4a, 5a) de fibres de carbone unidirectionnelles de chaque pli externe (4, 5) étant en regard de la nappe (2b, 3b) de fibres de carbone unidirectionnelles du pli interne correspondant (2, 3) ; et
- un tissu (4b, 5b) de fibre de verre E de masse inférieure ou égale à 30 g/m², et pré imprégné d'au moins 70% en poids de résine époxy.

2. Panneau composite selon la revendication 1, dans lequel la résine époxy est auto extinguible.

3. Panneau composite selon l'une quelconque des revendications 1 ou 2, dans lequel l'âme (1) en nid d'abeille présente une direction L dite de « sens ruban » et une direction W dite de « sens expansion », perpendiculaire à la direction L, et dans lequel la première direction de la nappe de fibres de carbone unidirectionnel est perpendiculaire à la direction L de sens ruban.

4. Panneau composite selon l'une quelconque des revendications précédentes, dans lequel la deuxième direction de la nappe de fibres de carbone du pli externe forme un angle avec la première direction de la nappe de fibres de carbone du pli interne, compris entre 45° et 135°, de préférence entre 60° et 120°, avantageusement de 90°.

5. Panneau composite selon l'une quelconque des revendications précédentes, comprenant, en outre, entre un pli interne (2, 3) et un pli externe (4, 5), au moins une, de préférence entre une et quatre nappe(s) (6, 7, 8, 9) de fibres de carbone unidirectionnelles de masse inférieure ou égale à 100 g/m², pré imprégnée(s) entre 30% et 45 % en poids d'une résine époxy, et orientée(s) selon la même deuxième direction que celle de fibres de carbone unidirectionnelles de la nappe (4a, 5a) de fibres de carbone unidirectionnelles des plis externes.

6. Panneau composite selon l'une quelconque des revendications précédentes, dans lequel :
• Les fibres de verre E présentent :
- une résistance à la traction maximale égale à 3 400 MPa,
- un module d'élasticité de 70 000 MPa environ et
- une densité relative égale à 2,5 g/cm³.
• Les fibres de carbone présentent :
- une résistance à la traction maximale comprise entre 4 000 et 7 000 MPa,
- un module d'élasticité compris entre 275 000 et 300 000 MPa et
- une densité relative égale à 1,8 g/cm³.

7. Panneau composite selon l'une quelconque des revendications précédentes, comprenant, en outre, un tissu (11) de fibres de pararamide associé à une résine de Polyétherimide (PEI).

8. Panneau composite selon l'une quelconque des revendications précédentes, comprenant, en outre, des inserts de fixation (30) en polyamide-imide (Torlon®).

9. Procédé de fabrication d'un panneau composite selon l'une quelconque des revendications 1 à 8, **caractérisé en ce qu'**il comprend les étapes suivantes :
(a) déposer de part et d'autre d'une âme (1) en nid d'abeille en poly(p-phénylènetéréphtalamide), un pli interne (2, 3), comprenant :
- en contact avec l'âme (1) en nid d'abeille, un tissu (2a, 3a) de fibre de verre E de masse inférieure ou égale à 30 g/m², et pré imprégné d'au moins 70% en poids de résine époxy ; et
- en contact avec le tissu de fibres de verre E, une nappe (2b, 3b) de fibres de carbone unidirectionnelles de module d'élasticité compris entre 275 et 300 GPa de masse inférieure ou égale à 100 g/m², et pré imprégnée entre 30% et 40 % en poids d'une résine époxy, disposées de sorte que les fibres de carbone soient orientées selon une première direction ;
(c) déposer en regard de la nappe (2b, 3b) de fibres de carbone unidirectionnelles de chaque pli interne (2, 3), un pli externe (4, 5) comprenant :
- en regard de la nappe (2b, 3b) de fibres de carbone unidirectionnelles du pli interne (2, 3) correspondant, une nappe (4a, 5a) de fibres de carbone unidirectionnelles disposées de telle sorte que les fibres soient orientées selon une deuxième direction, différente de la première direction de la nappe (2b, 3b) de fibres de carbone du pli interne (2, 3), de module d'élasticité compris entre 275 et 300 GPa de masse inférieure ou égale à 100 g/m², et pré imprégnée entre 30% et 40 % en poids d'une résine époxy ; et
- en contact avec la nappe (4a, 5a) de fibres de carbone unidirectionnelles orientées selon la deuxième direction, un tissu (4b, 5b) de fibre de verre E de masse inférieure ou égale à 30 g/m², et pré imprégné d'au moins 70% en poids de résine époxy, afin d'obtenir un empilement de couche composite (10).

10. Procédé de fabrication selon la revendication précédente, comprenant en outre, une étape (b), entre l'étape (a) et l'étape (c), de dépôt d'au moins une nappe (6, 7, 8, 9) de fibres de carbone unidirectionnelles de masse inférieure ou égale à 100 g/m², et pré imprégnée entre 30% et 40 % en poids d'une résine époxy, orientée(s) selon la même deuxième direction que celle de fibres de carbone unidirectionnelles de la nappe (4a, 5a) de fibres de carbone unidirectionnelles des plis externes déposée à l'étape (c).

11. Procédé de fabrication selon l'une quelconque des revendications 9 ou 10, dans lequel, préalablement à l'étape (a), chaque face de l'âme en nid d'abeille est usinée avec une fraise (20) comportant une scie (22) en extrémité de fraise.

12. Procédé de fabrication selon la revendication précédente, dans lequel le panneau (10) est usiné localement sur au moins une partie de son épaisseur, pour créer des puits dans lesquels sont disposés des inserts de fixation (30) en polyamide-imide maintenus en position par une colle.

## Patentansprüche

1. Verbundplatte (10), **dadurch gekennzeichnet, dass** sie Folgendes umfasst:
• einen Kern (1) mit Wabenstruktur aus Poly(p-phenylenterephtalamid), wobei auf beiden Seiten desselben zwei Häute angeordnet sind, die jeweils Folgendes umfassen:
• eine innere Lage (2, 3) in Kontakt mit dem Kern (1) mit Wabenstruktur, und umfassend:
- ein Gewebe (2a, 3a) aus Glasfaser E, das mit mindestens 70 Gew.% Epoxidharz imprägniert ist, und mit einer Masse von weniger oder gleich 30 g/m², wobei das Gewebe (2a, 3a) in Kontakt mit dem Kern (1) mit Wabenstruktur ist; und
- eine Schicht (2b, 3b) aus einseitig gerichteten Kohlenstofffasern, die in einer ersten Richtung ausgerichtet sind, mit einem Elastizitätsmodul das zwischen 275 und 300 Gpa liegt, mit einer Masse von weniger oder gleich 100 g/m² und vorimprägniert zwischen 30 und 40 Gew.% mit einem Epoxidharz;
eine äußere Lage (4, 5) in Kontakt mit der entsprechenden inneren Lage (2, 3) umfassend:
- eine Schicht (4a, 5a) aus einseitig gerichteten Kohlenstofffasern, die in einer zweiten Richtung ausgerichtet sind, die verschieden von der ersten Richtung der Schicht (2b, 3b) aus Kohlenstofffaser der inneren Lage (2, 3) sind, mit einem Elastizitätsmodul, das zwischen 275 und 300 Gpa liegt, mit einer Masse von weniger oder gleich 100 g/m² und vorimprägniert zwischen 30 und 40 Gew.% mit einem Epoxidharz; wobei die Schicht (4a, 5a) aus einseitig gerichteten Kohlenstofffasern jedes äußeren Lagers (4, 5) der Schicht (2b, 3b) aus einseitig gerichteten Kohlenstofffasern der entsprechenden inneren Lage (2, 3) gegenüber liegt; und
- ein Gewebe (4b, 5b) aus Glasfaser E, mit einer Masse von weniger als oder gleich wie 30 g/m² und vorimprägniert mit mindestens 70 Gew.% Epoxidharz.

2. Verbundplatte nach Anspruch 1, wobei das Epoxidharz selbstlöschend ist.

3. Verbundplatte nach einem beliebigen der Ansprüche 1 oder 2, wobei der Kern (1) mit Wabenstruktur eine Richtung L, bezeichnet als "Bandrichtung", und eine Richtung W, bezeichnet als "Expansionsrichtung", senkrecht zur Richtung L, aufweist, und wobei die erste Richtung der Schicht aus einseitig gerichteten Kohlenstofffasern senkrecht zur Richtung L der Bandrichtung ist.

4. Verbundplatte nach einem beliebigen der vorhergehenden Ansprüche, wobei die zweite Richtung der Schicht aus Kohlenstofffasern der äußeren Lage einen Winkel mit der ersten Richtung der Schicht aus Kohlenstofffasern der inneren Lage bildet, der zwischen 45° und 135°, vorzugsweise zwischen 60° und 120°, vorteilhafterweise 90° beträgt.

5. Verbundplatte nach einem beliebigen der vorhergehenden Ansprüche, umfassend außerdem, zwischen einer inneren Lage (2, 3) und einer äußeren Lage (4, 5), mindestens ein, vorzugsweise zwischen einer und vier Schicht(en) (6, 7, 8, 9) aus einseitig gerichteten Kohlenstofffasern, mit einer Masse von weniger oder gleich 100 g/m², vorimprägniert zwischen 30 und 45 Gew.% mit einem Epoxidharz und ausgerichtet in der gleichen zweiten Richtung wie diejenigen der Fasern aus einseitig gerichteten Kohlenstofffasern der Schicht (4a, 5a) aus einseitig gerichteten Kohlenstofffasern der äußeren Lagen (4, 5).

6. Verbundplatte nach einem beliebigen der vorhergehenden Ansprüche, wobei
- die Glasfasern E Folgendes darstellen:
- einen Zugwiderstand von maximal gleich 3 400 MPa,
- ein Elastizitätsmodul von ungefähr 70 000 MPa und
- eine relative Dichte gleich 2,5 g/cm³.
- die Kohlenstofffasern Folgendes darstellen:
- einen maximalen Zugwiderstand, der zwischen 4000 und 7000 Mpa liegt,
- ein Elastizitätsmodul, das zwischen 275 000 und 300 000 Gpa liegt,
- eine relative Dichte gleich 1,8 g/cm³.

7. Verbundplatte nach einem beliebigen der vorhergehenden Ansprüche, umfassend außerdem ein Gewebe (11) aus Pararamidfasern, assoziiert mit einem Harz aus Polyetherimid (PEI).

8. Verbundplatte nach einem beliebigen der vorhergehenden Ansprüche, umfassend außerdem Befestigungseinsätze (30) aus Polyamid-imide(Torlon®).

9. Verfahren zur Herstellung einer Verbundplatte nach einem beliebigen der Ansprüche 1 bis 8, **dadurch gekennzeichnet, dass** es die folgenden Schritte umfasst:
(a) Ablegen, auf beiden Seiten eines Kerns (1) mit Wabenstruktur aus Poly(p-phenylenterephtalamid), einer inneren Lage (2, 3), umfassend:
- in Kontakt mit dem Kern (1) mit Wabenstruktur ein Gewebe (2a, 3a) aus Glasfaser E, mit einer Masse von weniger als oder gleich wie 30 g/m² und vorimprägniert mit mindestens 70 Gew.% Epoxidharz; und
- in Kontakt mit dem Gewebe aus Glasfasern E, eine Schicht (2b, 3b) aus einseitig gerichteten Kohlenstofffasern, mit einem Elastizitätsmodul, das zwischen 275 und 300 Gpa liegt, mit einer Masse von weniger oder gleich 100 g/m² und vorimprägniert zwischen 30 und 40 Gew.% mit einem Epoxidharz, derart angeordnet, dass die Kohlenstofffasern gemäß einer ersten Richtung ausgerichtet sind,
(c) Ablegen, gegenüber der Schicht (2b, 3b) aus einseitig gerichteten Kohlenstofffasern, jeder inneren Lage (2, 3) einer äußeren (4, 5) Lage, umfassend:
- gegenüber der Schicht (2b, 3b) aus einseitig gerichteten Kohlenstofffasern der entsprechenden inneren Lage (2, 3) eine Schicht (4a, 5a) aus einseitig gerichteten Kohlenstofffasern, die derart angeordnet sind, dass die Fasern gemäß einer zweiten Richtung ausgerichtet sind, die verschieden von der ersten Richtung der Schicht (2b, 3b) aus Kohlenstofffasern der inneren Lage (2, 3) ist, mit einem Elastizitätsmodul, das zwischen 275 und 300 Gpa liegt, mit einer Masse von weniger als oder gleich wie 100 g/m² und vorimprägniert zwischen 30 und 40 Gew.% mit einem Epoxidharz; und
- in Kontakt mit der Schicht (4a, 5a) aus einseitig gerichteten Kohlenstofffasern, die in der zweiten Richtung ausgerichtet sind, ein Gewebe (4b, 5b) aus Glasfaser E, mit einer Masse von weniger oder gleich 30 g/m² und vorimprägniert mit mindestens 70 Gew.% Epoxidharz, um eine Stapelung der Verbundschicht (10) zu erhalten.

10. Verfahren zur Herstellung nach dem vorhergehenden Anspruch, umfassend außerdem einen Schritt (b), zwischen dem Schritt (a) und dem Schritt (c), des Ablegens von mindestens einer Schicht (6, 7, 8, 9) aus einseitig gerichteten Kohlenstofffasern, mit einer Masse von weniger oder gleich 100 g/m² und vorimprägniert zwischen 30 und 40 Gew.% mit einem Epoxidharz, ausgerichtet gemäß der gleichen zweiten Richtung wie derjenigen von einseitig gerichteten Kohlenstofffasern der Schicht (4a, 5a) aus einseitig gerichteten Kohlenstofffasern der äußeren Lage (4, 5), die in Schritt (c) abgelegt sind.

11. Verfahren nach einem beliebigen der Ansprüche 9 bis 10, wobei vor dem Schritt (a) jede Seite des Kerns mit Wabenstruktur mit einer Fräse (20) bearbeitet wird, die eine Säge (22) am Ende der Fräse aufweist.

12. Verfahren zur Herstellung nach dem vorhergehenden Anspruch, wobei die Platte (10) lokal auf mindestens einem Teil ihrer Dicke bearbeitet wird, um Schächte zu erzeugen, in denen die Befestigungseinsätze (30) aus Polyamid-Imid, angeordnet sind, die durch einen Klebstoff in ihrer Position gehalten werden.

## Claims

1. A composite panel (10) **characterized in that** it comprises:
• a honeycomb core (1) in poly(p-phenyleneterephthalamide), on either side of which are positioned two skins each comprising:
• an internal ply (2, 3) in contact with the honeycomb core (1), and comprising:
- a glass fiber E fabric (2a, 3a) impregnated with at least 70% by weight of epoxy resin, and with a mass of less than or equal to 30 g/m², the fabric (2a, 3a) being in contact with the honeycomb core (1); and
- a web (2b, 3b) of unidirectional carbon fibers oriented along a first direction, with an elastic modulus comprised between 275 and 300 GPa, with a mass of less than or equal to 100 g/m² , and pre-impregnated with between 30% and 40% by weight of an epoxy resin;
• an external ply (4, 5), in contact with the corresponding internal ply (2, 3) comprising:
- a web (4a, 5a) of unidirectional carbon fibers oriented along a second direction different from the first direction of the web (2b, 3b) of carbon fibers of the internal ply (2, 3), with an elastic module comprised between 275 and 300 GPa, with a mass of less than or equal to 100 g/m², and pre-impregnated with between 30% and 40% by weight of an epoxy resin, the web (4a, 5a) of unidirectional carbon fibers of each external ply (4, 5) facing the web (2b, 3b) of unidirectional carbon fibers of the corresponding internal ply (2, 3); and
- a fabric (4b, 5b) of glass fiber E with a mass of less than or equal to 30 g/m², and pre-impregnated with at least 70% by weight of epoxy resin.

2. The composite panel according to claim 1, wherein the epoxy resin is self-extinguishable.

3. The composite panel according to any of claims 1 or 2, wherein the honeycomb core (1) has a direction L a so-called "ribbon direction" and a direction W a so-called "expansion direction", perpendicular to the direction L, and wherein the first direction of the web of unidirectional carbon fibers is perpendicular to the direction L with the ribbon direction.

4. The composite panel according to any of the preceding claims, wherein the second direction of the web of carbon fibers of the external ply forms an angle with the first direction of the web of carbon fibers of the internal ply, comprised between 45° and 135°, preferably between 60° and 120°, advantageously 90°.

5. The composite panel according to any of the preceding claims, further comprising between an internal ply (2, 3) and an external ply (4, 5), at least one, preferably between one and four web(s) (6, 7, 8, 9) of unidirectional carbon fibers with a mass of less than or equal to 100 g/m², pre-impregnated with between 30% and 45% by weight of an epoxy resin, and oriented along the same second direction as the one of unidirectional carbon fibers of the web (4a, 5a) of unidirectional carbon fibers of the external plies.

6. The composite panel according to any of the preceding claims, wherein:
• The glass fibers E have:
- a maximum tensile strength equal to 3,400 MPa,
- an elastic modulus of about 70,000 MPa and
- a relative specific gravity equal to 2.5 g/cm³.
• The carbon fibers have:
- a maximum tensile strength comprised between 4,000 and 7,000 MPa,
- an elastic modulus comprised between 275,000 and 300,000 MPa and
- a relative specific gravity equal to 1.8 g/cm³.

7. The composite panel according to any of the preceding claims, further comprising a fabric (11) of pararamide fibers associated with a polyetherimide (PEI) resin.

8. The composite panel according to any of the preceding claims, further comprising attachment inserts (30) in polyamide-imide (Torlon®).

9. A method for manufacturing a composite panel according to any of claims 1 to 8, **characterized in that** it comprises the following steps:
(a) depositing on either side of a honeycomb core (1) in poly(p-phenyleneterephthalamide), an internal ply (2, 3), comprising:
- in contact with the honeycomb core (1), a fabric (2a, 3a) of glass fiber E with a mass of less than or equal to 30 g/m², and pre-impregnated with at least 70% by weight of epoxy resin; and
- in contact with the glass fiber E fabric, a web (2b, 3b) of unidirectional carbon fibers with an elastic modulus comprised between 275 and 300 GPa with a mass of less than or equal to 100 g/m², and pre-impregnated with between 30% and 40% by weight of an epoxy resin, positioned so that the carbon fibers are oriented along a first direction;
(c) depositing facing the web (2b, 3b) of unidirectional carbon fibers of each internal ply (2, 3), an external ply (4, 5) comprising:
- facing the web (2b, 3b) of unidirectional carbon fibers of the corresponding internal ply (2, 3), a web (4a, 5a) of unidirectional carbon fibers positioned so that the fibers are oriented along a second direction, different from the first direction of the web (2b, 3b) of carbon fibers of the internal ply (2, 3), with an elastic modulus comprised between 275 and 300 GPa with a mass of less than or equal to 100 g/m², and pre-impregnated with between 30% and 40% by weight of an epoxy resin; and
- in contact with the web (4a, 5a) of unidirectional carbon fibers oriented along the second direction, a fabric (4b, 5b) of glass fiber E with a mass less than or equal to 30 g/m², and pre-impregnated with at least 70% by weight of epoxy resin, in order to obtain a stack of composite layer (10).

10. The manufacturing method according to the preceding claim, further comprising, a step (b), between step (a) and step (c), for depositing at least one web (6, 7, 8, 9) of unidirectional carbon fibers with a mass of less than or equal to 100 g/m², and pre-impregnated with between 30% and 40% by weight of an epoxy resin, oriented along the same second direction as the one of the unidirectional carbon fibers of the web (4a, 5a) of unidirectional carbon fibers of the external plies deposited in step (c).

11. The manufacturing method according to any of claims 9 or 10, wherein, before step (a), each face of the honeycomb core is machined with a milling cutter (20) including a saw (22) at the end of the cutter.

12. The manufacturing method according to preceding claim, wherein the panel (10) is locally machined on at least one portion of its thickness, in order to produce wells in which are positioned attachment inserts (30) in polyamide-imide held in position with an adhesive.
